# EUROPÄISCHE PATENTANMELDUNG

(11) **EP 1 058 038 A2**
(43) Veröffentlichungstag der Anmeldung: **06.12.2000**
(21) Anmeldenummer: 00110321.7
(22) Anmeldetag: 13.05.2000
(51) Int. Cl.: F16K 11/052

(54) **Schüttgutweiche**

(30) Priorität: 01.06.1999 DE 19925200
(71) Anmelder: Waeschle GmbH, 88250 Weingarten (DE)
(72) Erfinder: Huber, Werner, 38116 Braunschweig (DE); Westendarp, Hans-Heinrich, 38102 Braunschweig (DE)
(74) Vertreter: Hemmelmann, Klaus

(57) **Zusammenfassung**

Eine Schüttgutweiche umfaßt ein Gehäuse (1) mit einem Eingangsanschluß (4) und mindestens zwei Abgangsanschlüssen (5), (6), die mittels einer in einem Verbindungskanal (10) angeordneten, um eine Drehachse (12) schwenkbaren Weichenklappe (11) wechselweise mit dem Eingangsanschluß verbindbar sind. Die Weichenklappe ist in ihren jeweiligen Funktionsstellungen durch Dichtungen (16) gegenüber den inneren Wandungen des Gehäuses abdichtbar. Die Dichtungen sind an den Stirnflächen (15) der Weichenklappe angeordnet und bevorzugt druckmittelbeaufschlagbar ausgeführt.

## Beschreibung

Die Erfindung betrifft eine Schüttgutweiche, umfassend ein Gehäuse mit einem Eingangsanschluß und mindestens zwei Abgangsanschlüssen, die mittels einer in einem Verbindungskanal angeordneten, um eine Drehachse schwenkbaren Weichenklappe wechselweise mit dem Eingangsanschluß verbindbar sind, wobei die Weichenklappe in ihren jeweiligen Funktionsstellungen durch Dichtungen gegenüber den inneren Wandungen des Gehäuses abdichtbar ist.

Eine gattungsgemäße Schüttgutweiche ist aus der Druckschrift DE-OS 2 116 709 bekannt. Sie weist einen Eingangsanschluß, einen mit diesem achsgleichen ersten Abgangsanschluß und einen winklig abzweigenden zweiten Abgangsanschluß auf, die durch einen Verbindungskanal mit rechteckigem Querschnitt verbunden sind. In diesem Verbindungskanal ist ein Leitelement in Form einer um eine Drehachse schwenkbaren, ebenfalls rechteckigen Weichenklappe angeordnet.

Die Weichenklappe kann zwei Funktionsstellungen einnehmen, in denen der Eingangsanschluß jeweils mit einem der Abgangsanschlüsse verbunden ist, während der andere Anschluß durch die Weichenklappe dichtend abgeschlossen wird. Die Funktionsstellungen entsprechen den oberen und unteren Endstellungen der Weichenklappe.

Im Bereich der Drehachse sowie an der ihr gegenüberliegenden Kanten der Weichenklappe wird die Dichtwirkung durch im Gehäuse angeordnete Dichtleisten erzielt. Die seitliche Abdichtung bewirken flexible Membranen an den Innenseiten der Seitendeckel des Gehäuses, die mittels eines Druckfluids oder durch elastische Einlagen an die seitlichen Stirnflächen der Weichenklappe anpreßbar sind.

Diese Anordnung ist mit verschiedenen Nachteilen behaftet. Einerseits ist die Anbringung der naturgemäß großflächigen Membranen mit einem erheblichen Fertigungsaufwand an den Seitendeckeln verbunden. Zum anderen sind die Membranen unmittelbar dem Schüttgutstrom und damit einem nicht unerheblichen Strahlverschleiß ausgesetzt. Ferner liegen die Membranen auch beim Schalten der Weiche an den seitlichen Stirnflächen der Weichenklappe an, wodurch ein zusätzlicher Reibverschleiß auftritt.

Die Patentschrift DE 1 137 679 offenbart eine Weiche, deren kreisrunde Weichenklappe aus einem nachgiebigen Material besteht, das sich in den jeweiligen Funktionsstellungen dichtend an passend geformte Sitzflächen im Gehäuse anpreßt. Die Anpressung kann beispielsweise, sofern das nachgiebige Material der Weichenklappe einen ferromagnetischen Werkstoff enthält, durch im Gehäuse angeordnete Elektromagneten herbeigeführt werden.

Da in der chemischen Industrie häufig die Förderung gestellt wird, daß produktführende Oberflächen aus einem metallischen, chemisch beständigen Werkstoff bestehen müssen, ist die Anwendbarkeit dieser bekannten Weiche eingeschränkt. Die Erzeugung der Anpreßkraft erfordert darüber hinaus einen erheblichen konstruktiven Aufwand.

In der Offenlegungsschrift DE-OS 1 916 581 wird eine Weiche mit einem im Gehäuse drehbar gelagerten, zylinderförmigen Drehküken beschrieben, das zwei zur Erzeugung der gewünschten Kanalverbindungen geeignete Durchgangsbohrungen aufweist. Die kükenseitigen Enden der Eingangs- und Abgangsanschlüsse sind von ringförmigen, in Nuten eingesetzten Schlauchdichtungen umgeben, die durch Aufblasen mittels Druckluft auf die Mantelfläche des Kükens gespannt werden können.

Derartig gedichtet Weichen sind allgemein bekannt, wobei die aufblasbaren Dichtungen alternativ auch in entsprechenden Nuten im Küken angeordnet werden können.

In beiden Fällen müssen die Nuten mit konstanter Tiefe in die gewölbte Mantelfläche von Küken oder Gehäuseinnenseite eingearbeitet werden, um eine gleichmäßige Anpressung zu erreichen. Hierdurch wird die Fertigung der Weiche verteuert.

### Aufgabe

Der vorliegenden Erfindung liegt die Aufgabe zugrunde, eine Weiche bereitzustellen, die den jeweils abzusperrenden Abgangskanal bei einfacher Konstruktion und Fertigung zuverlässig abdichtet.

### Lösung

Die Aufgabe wird erfindungsgemäß dadurch gelöst, daß die Dichtungen an den Stirnflächen der Weichenklappe angeordnet sind. Die Dichtungen sind bevorzugt als Hohlprofil ausgeführt, das mit einem Druckmittel beaufschlagbar ist.

Zur weiteren Vereinfachung der Konstruktion können der Querschnitt des Verbindungskanals und die Weichenklappe im wesentlichen rechteckig ausgeführt werden, wobei die zu dichtenden Ecken der Weichenklappe gerundet sind. Durch das Runden der Ecken ist es problemlos möglich, die Dichtungen um die Ecken herumzuführen und einstückig auszubilden.

Eine einfache Montage der Weichenklappe wird bevorzugt dadurch ermöglicht, daß das Gehäuse Seitendeckel aufweist, die zumindest im Bereich der jeweiligen Funktionsstellungen der Weichenklappe mit in den Verbindungskanal ragenden und mit den gerundeten Ecken korrespondierenden Vorsprünge versehen sind. Diese für die Abdichtung im Bereich der gerundeten Ecken erforderlichen Vorsprünge sind in diesem Fall gemeinsam mit den Seitendeckeln demontierbar, so daß die Weichenklappe frei zugänglich ist.

Grundsätzlich ist es jedoch möglich, die korrespondierenden Vorsprünge einstückig oder entnehmbar auch im Grundkörper des Gehäuses anzuordnen.

Um während des Schaltvorgangs eine Berührung zwischen Gehäuse und Dichtung auszuschließen, werden die inneren Wandungen des Gehäuses nach einer besonderen Ausführung der Erfindung im Bereich zwischen den Funktionsstellungen der Weichenklappen gegenüber deren seitlichen Stirnflächen zurückversetzt.

### Figuren

Die Figuren stellen beispielhaft und schematisch eine Ausführung der Erfindung dar.

Es zeigen:
- Fig. 1: einen Längsschnitt durch eine erfindungsgemäße Weiche in einer ersten Funktionsstellung in Seitenansicht
- Fig. 2: einen Längsschnitt durch die Weiche nach Fig. 1 in einer zweiten Funktionsstellung in Seitenansicht

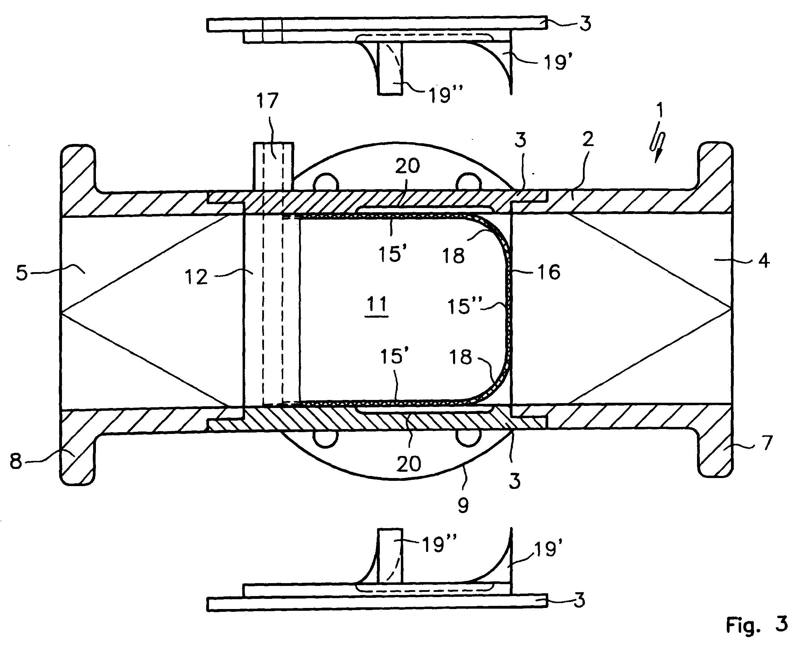

- Fig. 3: einen Längsschnitt durch die Weiche nach Fig. 1 in der ersten Funktionsstellung in Aufsicht sowie eine gesonderte Aufsicht auf die nicht geschnittenen Seitendeckel

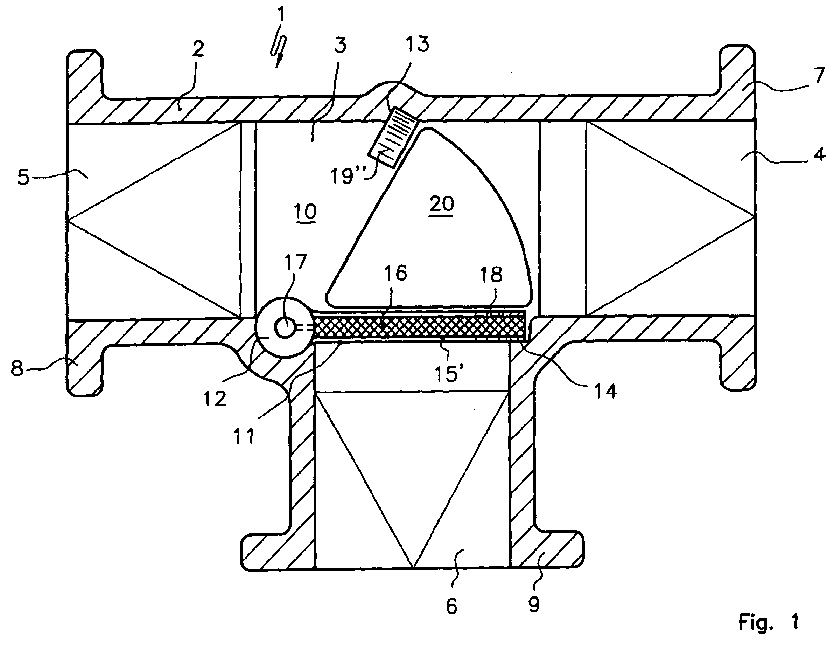

Die in Figur 1 dargestellte Weiche umfaßt ein Gehäuse 1 aus einem Grundkörper 2 und Seitendeckeln 3. Der Grundkörper 2 bildet einen Eingangsanschluß 4, einen ersten, mit dem Eingangsanschluß 4 achsgleichen Abgangsanschluß 5 sowie einen unter einem Winkel von 90° abzweigenden zweiten Abgangsanschluß 6 aus, die jeweils mit kreisrunden Flanschen 7, 8, 9 versehen sind. Der Eingangsanschluß 4 und die Abgangsanschlüsse 5, 6 stehen über einen Verbindungskanal 10 mit im wesentlichen rechteckigem Querschnitt in Verbindung, der seitlich durch die Seitendeckel 3 begrenzt wird.

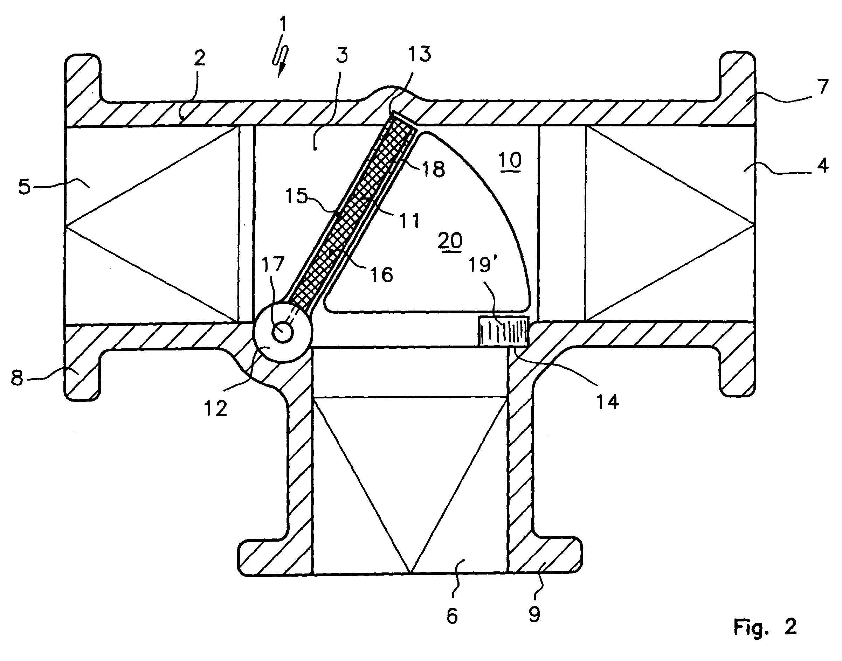

Im Verbindungskanal 10 ist eine Weichenklappe 11 um eine seitlich aus dem Gehäuse 1 herausragende Drehachse 12 schwenkbar angeordnet, die zwei Funktionsstellungen einnehmen kann. In der Funktionsstellung nach Figur 1 kommuniziert der Eingangsanschluß 4 mit dem achsgleichen ersten Abgangsanschluß 5, während der zweite Abgangsanschluß 6 durch die Weichenklappe 11 verschlossen wird. In der Funktionsstellung nach Figur 2 verschließt die Weichenklappe 11 den ersten Abgangsanschluß 5, wobei der Eingangsanschluß 4 mit dem winklig abzweigenden zweiten Abgangsanschluß 6 verbunden wird.

Die zuvor beschriebenen Funktionsstellungen entsprechen den durch Anschläge 13, 14 festgelegten Endstellungen der Weichenklappe 11.

Das zum Verstellen der Weichenklappe 11 erforderliche Drehmoment wird beispielsweise durch einen außerhalb des Gehäuses 1 angeordneten, nicht dargestellten pneumatischen oder hydraulischen Antrieb erzeugt.

Um den jeweils versperrten Abgangsanschluß gegenüber dem aktiven Strömungskanal druckdicht sowie wasser- und staubdicht zu verschließen, ist an den Stirnflächen 15', 15'' eine Dichtung 16 angeordnet, die in eine Nut in den Stirnflächen 15', 15'' eingelassen ist und den Spalt zwischen Weichenklappe 11 und Gehäuse 1 in den Funktionsstellungen abdichtet. Die als Hohlprofil ausgebildete Dichtung 16 kann über einen Druckmittelkanal 17 in der Drehachse 12 und der Weichenklappe 11 mit einem Druckmittel, beispielsweise Druckluft oder Wasser beaufschlagt werden, wodurch die räumliche Ausdehnung der Dichtung 16 veränderbar ist. In den Funktionsstellungen wird die Dichtung 16 unter Innendruck gesetzt, der beim Schalten der Weiche verringert wird. Bedarfsweise kann zum Schalten sogar ein Unterdruck an den Druckmittelkanal 17 angelegt werden.

Die Dichtung kann beispielsweise aus dem preiswerten und abriebfesten Werkstoff NBR oder, bei hohen Anforderungen an die Temperaturbeständigkeit, aus Silikonkautschuk bestehen.

Die Zufuhr des Druckmittels wird dadurch vereinfacht, daß die Dichtung 16 im Bereich der beiden seitlichen Stirnfläche 15' und der frontalen Stirnfläche 15'' einstückig ausgeführt ist. Um die Dichtung 16 problemlos um die Ecken 18 zwischen der seitlichen und der frontalen Stirnfläche 15', 15'' herumziehen zu können, sind diese gerundet. Der Rundungsradius ist mindestens so groß zu wählen, daß ein Knicken der Dichtung bei deren Montage und ein Blockieren des inneren Dichtungsquerschnitts zuverlässig vermieden werden.

Um zumindest in den Funktionsstellungen einen im wesentlichen gleichmäßigen, von der Dichtung 16 überbrückbaren Spalt zwischen den Stirnflächen 15', 15'' der Weichenklappe 11 und dem Gehäuse 1 vorzusehen, ist das Gehäuse 1 in den betreffenden Bereichen mit einer Kontur zu versehen, die mit den gerundeten Ecken 18 der Weichenklappe korrespondiert.

Diese Kontur wird durch mit den Seitendeckeln 3 verbundenen Vorsprüngen 19', 19'' erzeugt, die gemeinsam mit den Seitendeckeln 3 demontierbar sind. Die Weichenklappe 11 kann daher bei Wartungs- oder Instantsetzungsarbeiten in allen Stellungen problemlos seitlich aus dem Verbindungskanal 10 herausgezogen werden. Im Ausführungsbeispiel sind die Seitendeckel 3 jeweils einstückig mit einem Vorsprung 19' für die erste Funktionsstellung und mit einem Vorsprung 19'' für die zweite Funktionsstellung der Weichenklappe 11 versehen. Selbstverständlich können beide Vorsprünge 19', 19'' auch über eine gemeinsame Kontur miteinander verbunden werden, sofern die Beweglichkeit der Weichenklappe 11 dadurch nicht beeinträchtigt wird.

Der Rundungsradius der Ecken 18 kann beispielsweise 20 bis 30 mm betragen, wobei die Dichtung in eine 8 bis 10 mm tiefe Nut in der Weichenklappe 11 eingelegt wird. Dieser Radius ermöglicht das Herumziehen der Dichtung 16 um die Ecke 18, ohne die in den Verbindungskanal 10 und damit in den Förderstrom hereinragenden Vorsprünge 19'' über das erforderliche Maß hinaus zu vergrößern. Die Spaltweite beträgt beispielsweise 0,5 bis 2,5 mm, bevorzugt jedoch 1,0 bis 1,5 mm. In diesem Bereich kann ein seitliches Herausquellen der Dichtung 16 aus dem Spalt ausgeschlossen werden.

In den Funktionsstellungen wird ein Auftreffen von Fördergut auf die Dichtung 16 vermieden, so daß sich die Haltbarkeit der Dichtung erhöht und eine Verunreinigung des Förderguts durch den Dichtungswerkstoff verhindert wird.

Die Seitendeckel 3 sind ferner in dem Bereich, der von der Weichenklappe 11 nur beim Schalten überstrichen wird, mit Vertiefungen 20 versehen. Zwischen den Funktionsstellungen der Weichenklappe 11 ist die innere Wandung der Seitendeckel 3 gegenüber den seitlichen Stirnflächen 15' der Weichenklappe 11 zurückversetzt. Auf diese Weise wird eine Berührung zwischen Dichtung 16 und Gehäuse 1 beim Schalten zuverlässig vermieden, so daß der Verschleiß der Dichtung 16 und die zum Verstellen der Weichklappe 11 erforderliche Kraft verringert werden.

Der Erfindungsgegenstand ist selbstverständlich nicht auf das Ausführungsbeispiel beschränkt. Die Erfindung kann insbesondere auch bei Weichen mit anderen Abgangswinkeln und Anschlußgeometrien mit Vorteil eingesetzt werden.

### Bezugszeichenliste

- 1: Gehäuse
- 2: Grundkörper
- 3: Seitendeckel
- 4: Eingangsanschluß
- 5, 6: Abgangsanschluß
- 7, 8, 9: Flansch
- 10: Verbindungskanal
- 11: Weichenklappe
- 12: Drehachse
- 13, 14: Anschlag
- 15: Stirnfläche
- 16: Dichtung
- 17: Druckmittelkanal
- 18: Ecke
- 19: Vorsprung
- 20: Vertiefung

## Patentansprüche

1. Schüttgutweiche, umfassend ein Gehäuse (1) mit einem Eingangsanschluß (4) und mindestens zwei Abgangsanschlüssen (5), (6), die mittels einer in einem Verbindungskanal (10) angeordneten, um eine Drehachse (12) schwenkbaren Weichenklappe (11) wechselweise mit dem Eingangsanschluß verbindbar sind, wobei die Weichenklappe in ihren jeweiligen Funktionsstellungen durch Dichtungen (16) gegenüber den inneren Wandungen des Gehäuses abdichtbar ist, dadurch gekennzeichnet, daß die Dichtungen an den Stirnflächen (15) der Weichenklappe angeordnet sind.

2. Schüttgutweiche nach Anspruch 1, dadurch gekennzeichnet, daß die Dichtungen (16) druckmittelbeaufschlagbar sind.

3. Schüttgutweiche nach Anspruch 1 oder 2, dadurch gekennzeichnet, daß der Querschnitt des Verbindungskanals (10) und die Weichenklappe (11) im wesentlichen rechteckig ausgeführt sind, wobei die zu dichtenden Ecken (18) der Weichenklappe gerundet sind.

4. Schüttgutweiche nach Anspruch 3, dadurch gekennzeichnet, daß die Dichtungen (16) einstückig sind.

5. Schüttgutweiche nach Anspruch 3 oder 4, dadurch gekennzeichnet, daß das Gehäuse Seitendeckel (3) aufweist, die im Bereich der jeweiligen Funktionsstellungen der Weichenklappe (11) mit in den Verbindungskanal (10) ragenden und mit den gerundeten Ecken (18) korrespondierenden Vorsprünge (19) versehen sind.

6. Schüttgutweiche nach einem der vorhergehenden Ansprüche, dadurch gekennzeichnet, daß die inneren Wandungen des Gehäuses (1) im Bereich zwischen den Funktionsstellungen der Weichenklappe (11) gegenüber deren seitlichen Stirnflächen (15') zurückversetzt sind.
